# EUROPÄISCHE PATENTANMELDUNG

(11) **EP 2 387 043 A1**
(43) Veröffentlichungstag der Anmeldung: **16.11.2011**
(21) Anmeldenummer: 10305487.0
(22) Anmeldetag: 10.05.2010
(51) Int. Cl.: H01B 12/02, H01B 12/16

(54) **Übertragungssystem mit einem supraleitfähigen Kabel**

(71) Anmelder: Nexans, 75008 Paris (FR)
(72) Erfinder: Stemmle, Mark, 30161, Hannover (DE); Schmidt, Frank, 30855, Langenhagen (DE); Soika, Rainer, 30559, Hannover (DE); West, Beate, 30163, Hannover (DE)
(74) Vertreter: Döring, Roger

(57) **Zusammenfassung**

Es wird ein Übertragungssystem mit einem drei Phasenleiter (1,2,3) aufweisenden, supraleitfähigen Kabel und einem die Phasenleiter umgebenden, einen Hohlraum (HR) zur Führung eines Kühlmittels umschließenden Kryostat (KR) angegeben. Für die drei Phasenleiter (1,2,3) ist gemeinsamer Neutralleiter (11) vorhanden, der aus elektrisch normal leitendem Material besteht und außerhalb des Kryostats (KR) angeordnet ist. Der Kryostat (KR) besteht aus einer rundum geschlossenen, wärmeisolierten Hülle.

## Beschreibung

Die Erfindung bezieht sich auf ein Übertragungssystem mit einem drei Phasenleiter aufweisenden, supraleitfähigen Kabel und einem die Phasenleiter umgebenden, einen Hohlraum zur Führung eines Kühlmittels umschließenden Kryostat, bei welchem ein für die drei Phasenleiter gemeinsamer Neutralleiter vorhanden ist und bei welchem der Kryostat aus einer rundum geschlossenen, wärmeisolierten Hülle besteht (WO 2004/013868 A2).

Supraleitfähige Kabel haben in heutiger Technik elektrische Leiter aus einem Verbundstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise BSCCO (Wismut-Strontium-Kalzium-Kupfer-Oxid) als Material der 1. Generation oder ReBCO (Rareearth-Barium-Kupfer-Oxid), insbesondere YBCO (Yttrium-Barium-Kupfer-Oxid), als Materialien der 2. Generation. Ausreichend niedrige Temperaturen, um ein derartiges Material in den supraleitfähigen Zustand zu bringen, liegen beispielsweise zwischen 67 K und 90 K. Geeignete Kühlmittel sind beispielsweise Stickstoff, Helium, Neon und Wasserstoff oder Gemische dieser Stoffe.

Bei dem bekannten Übertragungssystem nach der eingangs erwähnten W02004/013868 A2 sind die drei Phasenleiter gegeneinander isoliert, konzentrisch zueinander angeordnet. Der Neutralleiter ist unter Einschluß einer weiteren Isolierschicht als vierter Leiter konzentrisch um die drei Phasenleiter herum angebracht. Die kompakte Anordnung mit vier Leitern aus supraleitfähigem Material liegt in einem Kryostat und wird beim Betrieb des Übertragungssystems zum Erreichen der Supraleitfähigkeit gekühlt. Das gilt auch für den ebenfalls supraleitfähiges Material aufweisenden Neutralleiter. Der Kryostat hat an diese kompakte Anordnung angepaßte große Abmessungen, einschließlich eines ausreichend großen Hohlraums zum Durchleiten des Kühlmittels.

Der Erfindung liegt die Aufgabe zugrunde, das eingangs geschilderte Übertragungssystem zu vereinfachen.

Diese Aufgabe wird gemäß der Erfindung dadurch gelöst, daß der Neutralleiter aus elektrisch normal leitendem Material besteht und außerhalb des Kryostats angeordnet ist.

Da der Neutralleiter bei diesem Übertragungssystem außerhalb des Kryostats liegt, kann er aus gegenüber supraleitfähigem Material preiswerterem, elektrisch normal leitendem Material bestehen, insbesondere aus Kupfer. Innerhalb des Kryostats brauchen damit beim Betrieb des Übertragungssystems nur noch die drei Phasenleiter gekühlt zu werden. Der Aufwand für die Kühlung kann bei diesem Übertragungssystem daher gegenüber bekanten Systemen verringert werden, weil eine mögliche Erwärmung des Neutrolleiters für dieselbe nicht berücksichtigt werden muß. Eine solche Erwärmung könnte durch einen bei unsymmetrischer Belastung der drei Phasenleiter bedingten Strom verursacht werden, der zu Wechselstromverlusten führen würde. Die entsprechende Erwärmung bzw. Verlustleistung müßte durch die Kühlanlage kompensiert werden, die damit für eine gegenüber Normalbetrieb erhöhte Kühlleistung auszulegen wäre. Durch die Anordnung des Neutralleiters außerhalb des Kryostats kann somit die Kühlleistung der Kühlanlage auf den Normalbetrieb zur Kühlung der drei Phasenleiter reduziert werden. Da auch die Abmessungen des Kabels wegen des außerhalb des Kryostats befindlichen Neutralleiters kleiner sind, können auch die Abmessungen des Kryostats verkleinert werden, mit entsprechend vermindertem Materialaufwand.

Ausführungsbeispiele des Erfindungsgegenstandes sind in den Zeichnungen dargestellt.

Die Fg. 1 bis 3 der Zeichnungen zeigen Querschnitte durch drei unterschiedlich aufgebaute Übertragungssysteme mit einem supraleitfähigen Kabel und einem Kryostat.

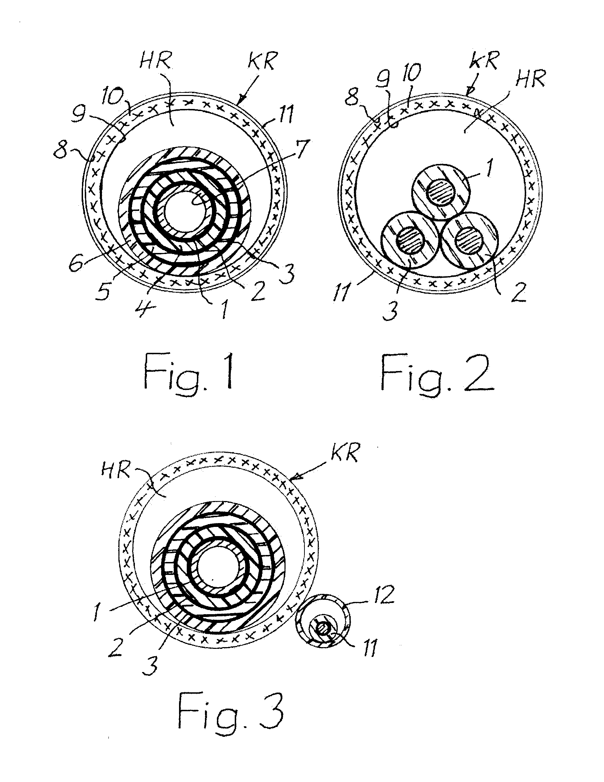

In Fig. 1 ist ein Übertragungssystem mit einem supraleitfähige Kabel im Schnitt dargestellt, das drei konzentrisch zueinander angeordnete, supraleitfähige Phasenleiter 1, 2 und 3 aufweist, die durch Schichten 4 und 5 aus Isoliermaterial gegeneinander isoliert sind. Um den außen liegenden Phasenleiter 3 ist eine weitere Schicht 6 aus Isoliermaterial angeordnet. Der innen liegende Phasenleiter 1 ist um einen Träger 7 herum angebracht, der im dargestellten Ausführungsbeispiel als Rohr ausgeführt ist. Der Träger 7 kann auch als massiver Strang ausgebildet sein.

Das supraleitfähige Kabel liegt in einem Kryostat KR, der auch einen Hohlraum HR zum Durchleiten eines Kühlmittels umschließt. Wenn der Träger 7 ein Rohr ist, kann das Kühlmittel zusätzlich auch durch dasselbe geleitet werden. Der Kryostat KR besteht beispielsweise aus zwei mir Abstand konzentrisch zueinander angeordneten metallischen Rohren 8 und 9, zwischen denen eine Vakuumisolierung 10 angebracht ist.

Außerhalb des Kryostats KR ist ein für alle drei Phasenleiter 1, 2 und 3 gemeinsamer, beispielsweise aus Kupfer bestehender Neutralleiter 11 angebracht. Er ist bei der Ausführungsform des Übertragungssystems nach Fig. 1 rund um den Kryostat KR herumgelegt. Der Neutralleiter 11 hat dann gleichzeitig die Funktion eines Schirms.

Das gilt auch bei der Ausführungsform des Übertragungssystems nach Fig. 2, bei welchem die drei Phasenleiter 1, 2 und 3 als voneinander getrennte, jeweils von einer Isolierung umgebene Leiter ausgeführt sind.

Abweichend von der Anordnung des Neutralleiters 11 nach den Fig. 1 und 2 kann derselbe gemäß Fig. 3 auch als isolierter Rundleiter neben dem Kryostat KR verlegt sein. Er kann dann beispielsweise in einem separaten Schutzrohr 12 angeordnet sein, das auch mit dem Kryostat KR verbunden sein kann. Der runde Neutralleiter 11 kann auch um den Kryostat KR mit langem Schlag herumgewickelt sein. Die Anordnung des Neutralleiters 11 nach Fig. 3 gilt für beide Ausführungsformen des supraleitfähigen Kabels nach den Fig. 1 und 2.

## Patentansprüche

1. Übertragungssystem mit einem drei Phasenleiter aufweisenden, supraleitfähigen Kabel und einem die Phasenleiter umgebenden, einen Hohlraum zur Führung eines Kühlmittels umschließenden Kryostat, bei welchem ein für die drei Phasenleiter gemeinsamer Neutralleiter vorhanden ist und bei welchem der Kryostat aus einer rundum geschlossenen, wärmeisolierten Hülle besteht, **dadurch gekennzeichnet, daß** der Neutralleiter (11) aus elektrisch normal leitendem Material besteht und außerhalb des Kryostats (KR) angeordnet ist.

2. Übertragungssystem nach Anspruch 1, **dadurch gekennzeichnet, daß** die drei Phasenleiter (1,2,3) gegeneinander isoliert, konzentrisch zueinander angeordnet sind.

3. Übertragungssystem nach Anspruch 1, **dadurch gekennzeichnet, daß** die drei Phasenleiter (1,2,3) als voneinander getrennte, von einer Isolierung umgebene Leiter aufgeführt sind.

4. Übertragungssystem nach einem der Ansprüche 1 bis 3, **dadurch gekennzeichnet, daß** der Neutralleiter (11) mit der Funktion eines elektrischen Schirms rund um den Kryostat (KR) verteilt außen auf demselben angebracht ist.

5. Übertragungssystem nach einem der Ansprüche 1 bis 3, **dadurch gekennzeichnet, daß** der Neutralleiter (11) als isolierter Rundleiter ausgeführt ist.

6. Übertragungssystem nach Anspruch 5, **dadurch gekennzeichnet, daß** der Neutralleiter (11) um den Kryostat(KR) herumgewickelt ist.

## Geänderte Patentansprüche

### Geänderte Patentansprüche gemäss Regel 137(2) EPÜ.

**1.** Übertragungssystem mit einem drei Phasenleiter aufweisenden, supraleitföhigen Kabel und einem die Phasenleiter umgebenden, einen Hohlraum zur Führung eines Kühlmittels umschließenden Kryostat, bei welchem ein für die drei Phasenleiter gemeinsamer Neutralleiter vorhanden ist und bei welchem der Kryostat aus einer rundum geschlossenen, wärmeisolierten Hülle besteht, **dadurch gekennzeichnet,**
- **daß** der Neutralleiter (11) in an sich bekannter Weise aus elektrisch normal leitendem Material besteht und außerhalb des Kryostats (KR) angeordnet ist und
- **daß** der Neutralleiter (11) als isolierter Rundleiter ausgeführt und neben dem Kryostat (KR) verlegt ist.

**2.** Übertragungssystem nach Anspruch 1, **dadurch gekennzeichnet, daß** der Neutralleiter (11) in einem separaten Schutzrohr (12) angeordnet ist.

**3.** Übertragungssystem nach Anspruch 1 oder 2, **dadurch gekennzeichnet, daß** die drei Phasenleiter (1,2,3) gegeneinander isoliert, konzentrisch zueinander angeordnet sind.

**4.** Übertragungssystem nach Anspruch 1 oder 2, **dadurch gekennzeichnet, daß** die drei Phasenleiter (1,2,3) als voneinander getrennte, von einer Isolierung umgebene Leiter aufgeführt sind.
